# EUROPÄISCHE PATENTSCHRIFT

(11) **EP 1 934 492 B1**
(45) Veröffentlichungstag und Bekanntmachung des Hinweises auf die Patenterteilung: **23.05.2012**
(21) Anmeldenummer: 06762943.6
(22) Anmeldetag: 02.08.2006
(51) Int. Cl.: F16C 11/04

(54) **HALTER FÜR EINE STANGE**
HOLDER FOR A ROD
SUPPORT DE BARRE

(30) Priorität: 07.10.2005 DE 102005048055
(43) Veröffentlichungstag der Anmeldung: 25.06.2008
(73) Patentinhaber: A. Raymond et Cie, 38000 Grenoble (FR)
(72) Erfinder: GOMBERT, Stéphane, F-38640 Claix (FR); PAU, Jean-Baptiste, F-38850 Bilieu (FR)
(74) Vertreter: Rüttgers, Joachim
(86) Internationale Anmeldenummer: PCT/EP2006/007622
(87) Internationale Veröffentlichungsnummer: WO 2007/042095

(56) Entgegenhaltungen:
- EP-A- 1 541 791
- WO-A-96/11144
- DE-U1- 29 804 061
- FR-A1- 2 544 034
- US-A- 4 357 000

## Beschreibung

Die Erfindung betrifft einen Halter für eine Stange gemäß dem O-berbegriff des Patentanspruches 1.

Ein derartiger Halter ist aus WO 96/11144 bekannt, der zum Halten einer Stange dient, die einen Schwenkabschnitt und einen gegenüber dem Schwenkabschnitt abgewinkelten Lagerabschnitt aufweist. Dieser vorbekannte Halter weist eine Lageranordnung auf, die über einen Lagerkanal verfügt, in den von einer Einführseite der Lagerabschnitt der Stange einfügbar und in dem der Lagerabschnitt drehbar lagerbar ist, so dass der Schwenkabschnitt auf einer Schwenkseite über die Lageranordnung übersteht und schwenkbar ist. Weiterhin ist ein Abschlussteil vorhanden ist, das an der Einführseite dem Lagerkanal in einem Abstand vorgelagert ist und das eine an einer stirnseitigen Randseite offene Durchführausnehmung zum Durchführen dies Schwenkabschnittes sowie des Lagerabschnittes der Stange aufweist, wobei zwischen der Lageranordnung und dem Abschlussteil ein Aufnahmeraum zum Anordnen des Schwenkabschnittes ausgebildet ist. Der Lagerabschnitt und das Abschlussteil sind an einem mit einer Bodenwand eines zusammenklappbaren Kunststoffbehälters verbundenen Steg angebracht, wobei die Stange aufgrund der Ausrichtung der Durchführausnehmung auch bei bestimmungsgemäßer Anordnung lösbar mit dem Halter verbunden ist.

Aus DE 298 04 061 U1 ist ein faltbarer Verpackungsbehälter mit einer Scharnieranordnung bekannt, die über ein starres Basisteil; über ein in dem Basisteil axial verschieblichen Sperrzeil und über ein von außen einsetzbares Verriegelungsteil verfügt.

Aus US-A-4,357,000 ist ein Schamieranordnung für einen Zaun bekannt, bei dem an einem Zaunteil eine Anzahl von zu einer Randseite offene Aufnahmestege angeformt sind. An einem anderen Zaunteil ist eine Schwenkachse angeformt, die in die Aufnahmestege einfügbar ist, so dass die Zaunteile gegeneinander schwenkbar sind.

Aus EP 1 541 791 A1 ist ein Lagerbock für eine einen Schwenkabschnitt und einen gegenüber dem Schwenkabschnitt abgewinkelten Lagerabschnitt aufweisende Stange bekannt, der über eine gegenüber dem Lagerbock drehbare Stangenaufnahme verfügt, in die die Stange lösbar eingeklipst ist.

Aus FR 2 544 034 A1 ist ein Halter für eine Stange bekannt, die einen Schwenkabschnitt und einen gegenüber dem Schwenkabschnitt abgewinkelten Lagerabschnitt aufweist. Dieser Halter verfügt über eine Lageranordnung, die mit einem Lagerkanal ausgestattet ist. In den Lagerkanal ist von einer Einführseite der Lagerabschnitt der Stange einfügbar, wobei der Lagerabschnitt in dem Lagerkanal drehbar gelagert ist, so dass der Schwenkabschnitt auf einer Schwenkseite über die Lageranordnung übersteht und schwenkbar ist. Die Lageranordnung ist mit einem an einem Trägerteil befestigbaren Befestigungsteil und mit einem dem Befestigungsteil verbindbaren Abdeckten ausgebildet, wobei der Lagerkanal durch Vorsehen von jeweils einer halbzylinderförmigen Kanalwand in dem Befestigungsteil sowie dem Abdeckteil ausgebildet ist. Dieser Aufbau ist zwar verhältnismäßig einfach, allerdings in nicht allen Anwendungen zufriedenstellend einsetzbar.

Der Erfindung liegt die Aufgabe zugrunde, einen halter für eine Stange der eingangs genannten Art anzugeben, in den der Lagerabschnitt verhältnismäßig einfach einfügbar und die Stange in einer mit einem Trägerteil befestigten Anordnung des Halters verliersicher gehalten ist.

Diese Aufgabe wird bei einem Halter für eine Stange der eingangs genannten Art erfindungsgemäß mit den kennzeichnenden Merkmalen des Patentanspruches 1 gelöst.

Durch die erfindungsgemäße Ausgestaltung des Halters lässt sich die Stange nach Einschieben ihres Lagerabschnittes in den Lagerkanal unter Ausrichtung des Schwenkabschnittes zum Durchtreten durch die Durchführausnehmung so anordnen, dass der Schwenkabschnitt in dem Aufnahmeraum angeordnet ist. Dadurch ergibt sich nach Anbringen des Halters an einem Trägerteil eine axiale als auch radiale Sicherung der Stange gegen ein unbeabsichtigtes Lösen von dem Halter.

Weitere zweckmäßige Ausgestaltungen der Erfindung sind Gegenstand der Unteransprüche.

Aus der nachfolgenden Beschreibung eines bevorzugten Ausführungsbeispiels der Erfindung unter Bezug auf die Figuren der Zeichnung ergeben sich weitere zweckmäßige Ausgestaltungen und Vorteile. Es zeigen:
- Fig. 1: in einer perspektivischen Ansicht ein Ausführungsbeispiel eines an einem Trägerteil befestigbaren erfindungsgemäßen Halters mit Blick auf eine von dem Trägerteil abgewandte Schwenkseite,
- Fig. 2: in einer perspektivischen Ansicht das Ausführungsbeispiel gemäß Fig. 1 mit Blick auf die dem Trägerteil zugewandte Randseite und
- Fig. 3: in einer perspektivischen Ansicht das Ausführungsbeispiel gemäß Fig. 1 und Fig. 2 mit einer eingefügten Stange mit Blick auf die dem Trägerteil abgewandte Schwenkseite.

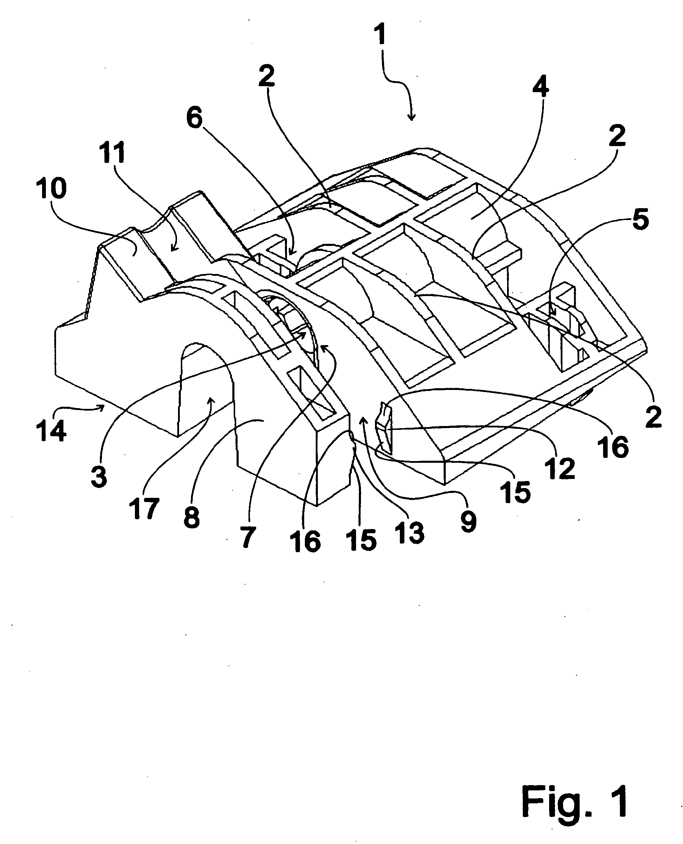

Fig. 1 zeigt in einer perspektivischen Ansicht ein Ausführungsbeispiel eines erfindungsgemäßen Halters, der an einem in Fig. 1 nicht dargestellten Trägerteil, beispielsweise einer Karosserie eines Kraftfahrzeugs, befestigbar ist. Aus der Darstellung gemäß Fig. 1 ist erkennbar, dass eine Lageranordnung 1 vorhanden ist, die eine Anzahl von Verstärkungsrippen 2 aufweist. Die Verstärkungsrippen 2 versteifen die Lageranordnung 1 und stützen eine einen Lagerkanal 3 mit zylindrischem Querschnitt umschließende Lagerwand 4 ab. Weiterhin ist die Lageranordnung 1 mit einem ersten Befestigungsbereich 5 und einem zweiten Befestigungsbereich 6 ausgebildet, die zum Befestigen des erfindungsgemäßen Halters an dem Trägerteil eingerichtet sind.

Der Lageranordnung 1 ist in einem Abstand von einer Einführseite 7 ein Abschlussteil 8 vorgelagert, wobei zwischen der Lageranordnung 1 und dem Abschlussteil 8 ein Aufnahmeraum 9 ausgebildet ist. An einer Seite ist der Aufnahmeraum 9 durch eine Anlagerampe 10 als eine Begrenzungsvorrichtung begrenzt, die zwischen der Lageranordnung 1 und dem Abschlussteil 8 angeordnet ist und über eine bei dem dargestellten Ausführungsbeispiel halbzylinderförmige Aufnahmevertiefung 11 verfügt.

Auf der der Anlagerampe 10 gegenüberliegenden Seite des Aufnahmeraums 9 ragen einander gegenüberliegende, an der Lageranordnung 1 beziehungsweise dem Abschlussteil 8 angeformte Sperrnasen 12, 13 als weitere Begrenzungsvorrichtungen in den Aufnahmeraum 9 hinein, wobei jede Sperrnase 12, 13 über eine einer Unterseite 14 des erfindungsgemäßen Halters zugewandte, flach ansteigende Aufgleitseite 15 sowie eine der Unterseite 14 abgewandte, gegenüber der Aufgleitseite 15 steiler abfallende Blockierseite 16 ausgebildet ist.

Schließlich ist das Abschlussteil 8 mit einer Durchführausnehmung 17 ausgebildet, die zu der Unterseite 14 als Randseite offen ist und eine gewölbte geschlossene Abschlusswand aufweist, die in Verlängerung der Kanalwand 4 liegt.

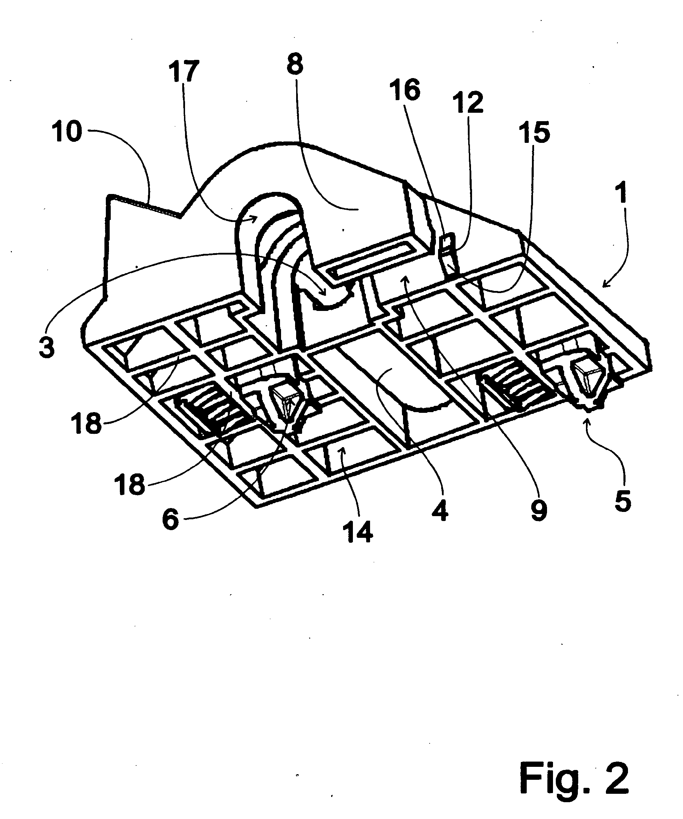

Fig. 2 zeigt in einer perspektivischen Ansicht das Ausführungsbeispiel gemäß Fig. 1 mit Blick auf die Unterseite 14. Aus Fig. 2 lässt sich erkennen, dass der Lagerkanal 3 umfänglich geschlossen und im Bereich der Anlagerampe 10 eine Anzahl von Verbindungsrippen 18 ausgebildet ist, um die Lageranordnung 1 mit dem Abschlussteil 8 auf der Seite zu verbinden, an der die Anlagerampe 10 ausgebildet ist.

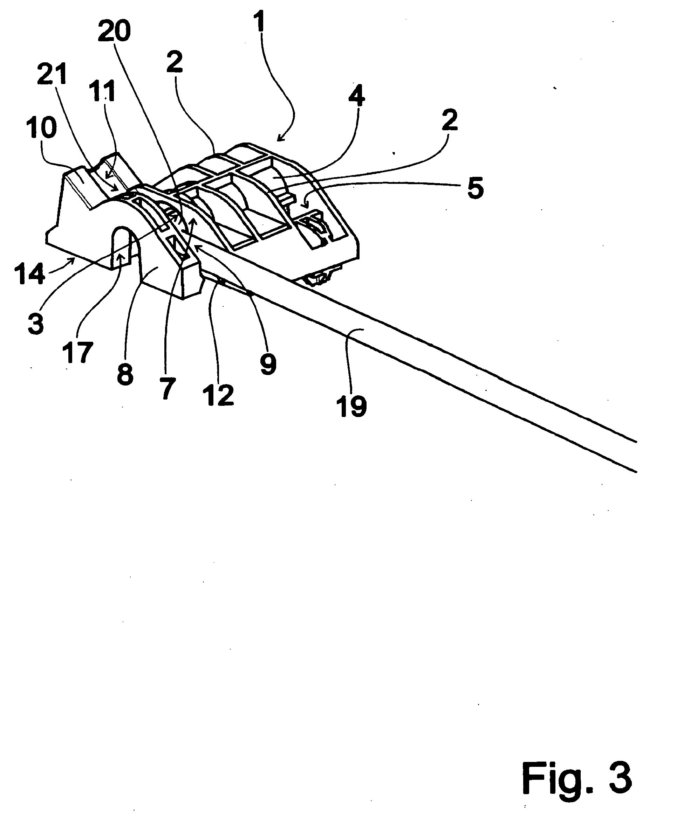

Fig. 3 zeigt in einer perspektivischen Ansicht das anhand Fig. 1 und Fig. 2 erläuterte Ausführungsbeispiel eines erfindungsgemäßen Halters, in den eine rundliche Stange eingefügt ist, die einen in der Darstellung gemäß Fig. 3 bereits in dem Aufnahmeraum 9 angeordneten Schwenkabschnitt 19 und einen gegenüber dem Schwenkabschnitt 19 rechtwinklig abgewinkelten Lagerabschnitt 20 aufweist, der in den Lagerkanal 3 eingeführt ist.

Zum Überführen der Stange in den erfindungsgemäßen Halter wird sie mit ihrem Schwenkabschnitt 19 in Verlängerung der Durchführausnehmung 17 und mit dem Lagerabschnitt 20 fluchtend mit dem Lagerkanal 3 ausgerichtet. Dann wird der Lagerabschnitt 20 in den Lagerkanal 3 eingeführt, bis der Schwenkabschnitt 19 im Bereich des Aufnahmeraumes 9 angeordnet und nach Aufgleiten an den Aufgleitseiten 15 der Sperrnasen 12, 13 und Überwinden dieses Hindernisses in der in Fig. 3 dargestellten Anordnung ist.

In der Anordnung gemäß Fig. 3 ist durch das Hintergreifen der Sperrnasen 12, 13 zum einen mit einer gewissen Sicherheit ausgeschlossen, dass sich der Schwenkabschnitt 19 unbeabsichtigt wieder aus dem Aufnahmeraum 9 herausdreht und durch die Blockierung durch das Abschlussteil 8 zum anderen vermindert, dass der Lagerabschnitt 20 aus dem Lagerkanal 3 herausgleiten kann.

In dieser vormontierten Anordnung ist der Halter mit eingefügter Stange nunmehr mit dem Trägerteil verbindbar, wobei nach Fertigstellen der Verbindung der Schwenkabschnitt 19 nunmehr in dem Aufnahmeraum 9 festgelegt ist und auf einer der Unterseite 14 gegenüberliegenden Schwenkseite 21 zwischen der in Fig. 3 dargestellten Anordnung bis in eine durch die Ausgestaltung der Anlagerampe 10 festgelegte Endstellung geschwenkt werden kann, in der er in der Aufnahmevertiefung 11, die mit ihrer Gestalt an den rundlichen Außendurchmesser des Schwenkabschnittes 19 angepasst ist, zu liegen kommt. Bei einer entgegengesetzten Schwenkrichtung bilden die steiler angestellten Blockierseiten 16 der Sperrnasen 12, 13 ein ebenfalls definiertes Hindernis zum Schutz für das Trägerteil.

## Patentansprüche

1. Halter für eine Stange, die einen Schwenkabschnitt (19) und einen gegenüber dem Schwenkabschnitt (19) abgewinkelten Lagerabschnitt (20) aufweist, mit einer Lageranordnung (1), die über einen Lagerkanal (3) verfügt, in den von einer Einführseite (7) der Lagerabschnitt (20) der Stange einfügbar und in dem der Lagerabschnitt (20) drehbar lagerbar ist, so dass der Schwenkabschnitt (19) auf einer Schwenkseite (21) über die Lageranordnung (1) übersteht und schwenkbar ist, und mit einem Abschlussteil (8), das an der Einführseite (7) dem Lagerkanal (3) in einem Abstand vorgelagert ist und das eine an einer Randseite offene Durchführausnehmung (17) zum Durchführen des Schwenkabschnittes (19) sowie des Lagerabschnittes (20) der Stange aufweist, wobei zwischen der Lageranordnung (1) und dem Abschlussteil (8) ein Aufnahmeraum (9) zum Anordnen des Schwenkabschnittes (19) ausgebildet ist, **dadurch gekennzeichnet, dass** an einer der Schwenkseite (21) gegenüberliegenden Unterseite (14) Befestigungsbereiche (5, 6) zur Befestigung des Halters an einem Trägerteil ausgebildet sind und dass die Durchführausnehmung (17) zu der Unterseite (14) des Halters offen ist, so dass bei mit einem Trägerteil verbundenem Halter der Schwenkabschnitt (19) einer in den Halter eingefügten Stange in dem Aufnahmeraum (9) festgelegt ist.

2. Halter nach Anspruch 1, **dadurch gekennzeichnet, dass** in dem Aufnahmeraum (9) Begrenzungsvorrichtungen (10, 12, 13) angeordnet sind.

3. Halter nach Anspruch 2, **dadurch gekennzeichnet, dass** auf der Schwenkseite (21) als eine Begrenzungsvorrichtung eine Anlagerampe (10) ausgebildet ist, an der der Schwenkabschnitt (19) in einer Endstellung zur Anlage kommt.

4. Halter nach Anspruch 3, **dadurch gekennzeichnet, dass** die Anlagerampe (10) eine Aufnahmevertiefung (11) für den Schwenkabschnitt (19) aufweist.

5. Halter nach einem der Ansprüche 2 bis 4, **dadurch gekennzeichnet, dass** an wenigstens einer den Aufnahmeraum (9) begrenzenden Wand der Lageranordnung (1) oder des Abschlussteiles (8) auf der der Anlagerampe (10) gegenüberliegenden Seite des Aufnahmeraumes (9) als weitere Begrenzungsvorrichtung eine Sperrnase (12, 13) ausgebildet ist.

6. Halter nach Anspruch 5, **dadurch gekennzeichnet, dass** an der Lageranordnung (1) beziehungsweise dem Abschlussteil (8) eine als weitere Begrenzungsvorrichtung eine weitere Sperrrnase (12, 13) ausgebildet ist, die der anderen Spiel-nase (12, 13) gegenüberliegt.

7. halter nach einem der Ansprüche 1 bis 6, **dadurch gekennzeichnet, dass** die Lageranordnung (1) einteilig ausgebildet ist und einen umfänglich geschlossenen Lagerkanal (3) aufweist, dessen Kanalwand (4) in einer Anzahl von Verstärkungsrippen (2) einer Rippenanordnung eingebunden ist.

## Claims

1. Holder for a rod, which has a pivoting section (19) and a bearing section (20) which is angled relative to the pivoting section (19), said holder comprising a bearing arrangement (1) which has a bearing channel (3) into which the bearing section (20) of the rod can be inserted from an insertion side (7) and in which the bearing section (20) can be rotatably mounted, such that the pivoting section (19) protrudes on a pivoting side (21) beyond the bearing arrangement (1) and can be pivoted, also comprising a terminating part (8) which is mounted on the insertion side (7) at a distance upstream of the bearing channel (3) and which has feed-through cutout (17), which is open on an edge side (14), for feeding through the pivoting section (19) and the bearing section (20) of the rod, wherein a receiving space (9) is provided between the bearing arrangement (1) and the terminating part (8) for arranging the pivoting section (19), **characterised in that** fastening regions (5, 6) are provided at the underside (14) opposite the pivoting side (21) for fastening the holder to a support part and that the feed-through cutout (17) is open to the underside (14) of the holder so that, with the holder attached to a support part, the pivoting section (19) of a rod inserted into the holder is firmly held within the receiving space (9).

2. Holder according to claim 1, **characterised in that** limiting devices (10, 12, 13) are arranged in the receiving space (9).

3. Holder according to claim 2, **characterised in that** a support ramp (10) is provided on the pivoting side (21) as a limiting device, with which the pivoting section (19) makes contact in an end position.

4. Holder according to claim 3, **characterised in that** the support ramp (10) comprises a receiving depression (11) for the pivoting section (19).

5. Holder according to one of the claims 2 to 4, **characterised in that** a blocking lug (12, 13) is provided as a further limiting device at least at one wall of the bearing arrangement (1) or of the terminating part (8) adjoining the receiving space (9), on the side of the receiving space (9) opposite the support ramp (10).

6. Holder according to claim 5, **characterised in that** a further blocking lug (12, 13) is provided as a further limiting device arranged, at the bearing arrangement (1) or the terminating part (8), opposite the other blocking lug (12, 13).

7. Holder according to one of the claims 1 to 6, **characterised in that** the bearing arrangement (1) is configured in one part and comprises a peripherally closed bearing channel (3), the channel wall (4) of which is integrated with a number of reinforcing ribs (2) of a rib arrangement.

## Revendications

1. Support pour une barre, qui comporte une portion de basculement (19) et une portion d'assise (20) qui est disposée de manière angulaire par rapport à la portion de basculement (19), comprenant un agencement d'assise (1) qui comporte une goulotte d'assise (3) dans laquelle, depuis le côté d'introduction (7), la portion d'assise (20) de la barre peut être insérée et dans laquelle la portion d'assise (20) peut être engagée en position de mise en appui avec la possibilité de tourner, de telle sorte que la portion de basculement (19), sur le côté de basculement (21), fait saillie au-dessus de l'agencement d'assise (1) et peut être basculée, et comprenant un élément d'extrémité (8) qui, sur le côté d'introduction (7), est disposé en amont de la goulotte d'assise (3) et qui comporte un évidement d'emmanchement (17) ouvert sur un côté pour l'insertion de la portion de basculement (19) ainsi que de la portion d'assise (20) de la barre, dans lequel il est prévu entre l'agencement d'assise (1) et l'élément d'extrémité (8) un logement de réception (9) pour la mise en place de la portion de basculement (10), **caractérisé en ce qu'**il est prévu au niveau de la partie inférieure (14) opposée au côté de basculement (21), des secteurs de fixation (5, 6) pour la fixation du support sur un élément faisant office de portée d'appui et **en ce que** l'évidement d'emmanchement (17) est ouvert en direction de la partie inférieure (14) du support, ce qui fait que, lorsque le support est raccordé à un élément faisant office de portée d'assise, la portion de basculement (19) d'une barre insérée dans le support est immobilisée en position dans le logement de réception (9).

2. Support selon la revendication 1, **caractérisé en ce que** des dispositifs de limitation de course (10, 12, 13) dont prévus dans le logement de réception (9).

3. Support selon la revendication 2, **caractérisé en ce qu'**il est prévu sur le côté de basculement (21), en tant que dispositif de limitation de course, une portion de butée inclinée (10) contre laquelle la portion de basculement (19) vient en contact d'application en position d'extrémité

4. Support selon la revendication 3, **caractérisé en ce que** la portion de butée inclinée (10) comporte une cavité de réception (11) pour la portion de basculement (19).

5. Support selon l'une des revendications 2 à 4, **caractérisé en ce qu'**il est prévu, au niveau d'au moins une des parois de l'agencement d'assise (1) délimitant le logement de réception (9) ou de l'élément d'extrémité (8), sur le côté du logement de réception (9) opposé à la portion de butée inclinée (10), en tant qu'autre dispositif de limitation de course, un ergot de blocage (12, 13).

6. Support selon la revendication 5, **caractérisé en ce qu'**il est prévu, au niveau de l'agencement d'assise (1) et, ou encore, de l'élément d'extrémité (8), en tant que dispositif de limitation de course, un autre ergot de blocage (12, 13), qui est disposé à l'opposé de l'autre ergot de blocage (12, 13).

7. Support selon l'une des revendications 1 à 6, **caractérisé en ce que** l'agencement d'assise (1) est réalisé selon une disposition monobloc et comporte une goulotte formant portée d'appui (3) fermée sur toute sa périphérie, dont la paroi (4) fait partie intégrante d'une pluralité de nervures de renforcement (2) d'un ensemble de nervures.
